# EUROPÄISCHE PATENTANMELDUNG

(11) **EP 2 383 097 A1**
(43) Veröffentlichungstag der Anmeldung: **02.11.2011**
(21) Anmeldenummer: 11162872.3
(22) Anmeldetag: 18.04.2011
(51) Int. Cl.: B29C 43/22, B29C 67/24, B29C 47/40, B29B 7/48

(54) **Vorrichtung zur Herstellung eines Verbundwerkstoffes**

(30) Priorität: 30.04.2010 DE 202010006305 U
(71) Anmelder: KraussMaffei Technologies GmbH, 80997 München (DE)
(72) Erfinder: Renkl, Josef, 85229 Markt Indersdorf (DE); Schmidhuber, Sebastian, 81245 München (DE)
(74) Vertreter: Wilhelm, Ludwig

(57) **Zusammenfassung**

Vorrichtung zur Herstellung eines Verbundwerkstoffes umfassend eine Compoundiereinheit (16) mit einer Verfahrenseinheit (60) mit einem Zylinder in dem zumindest zwei Extrusionsschnecken nach Art eines Extruders aufgenommen und drehangetrieben sind zumindest eine Zufuhröffnungen, wobei in die zumindest eine Zufuhröffnung oder in mehrere Zufuhröffnungen zwei reaktive Ausgangsmaterialien sowie ein Füllstoff zuführbar sind, sowie eine der Compoundiereinheit (16) nachgeschaltete Doppelbandeinrichtung (18) mit einem Unterband (66) und einem dazu beabstandeten Oberband (68) zwischen denen ein Spalt definierter Dicke ausgebildet ist, welchem das in der Compoundiereinheit (18) hergestellte Materialgemisch zugeführt wird.

## Beschreibung

Die vorliegende Erfindung betrifft eine Vorrichtung zur Herstellung eines Verbundwerkstoffes, insbesondere eines Verbundwerkstoffes, der einen großen Anteil eines Füllstoffes oder mehrerer Füllstoffe enthält.

Nachfolgend geht es um die Herstellung von Verbundwerkstoffen mit hohem Füllstoffanteil (beispielsweise Zement, Fasern, Kreide, etc), der zusammen mit reaktiven Ausgangsmaterialien zu einem reaktiven Gemisch vermischt und nachfolgend zu einem Verbundwerkstoffprodukt geformt wird.

Aus der DE 10 2006 038 197 ist eine Vorrichtung und ein Verfahren zur Verarbeitung von Duroplasten bekannt, bei der eine Compoundiereinrichtung verwendet wird, der zum einen ein aus Polyol- und Isocyanat-Komponenten bestehendes Polyurethangemisch zusammen mit Füllstoffen zugeführt, darin vermischt und diskontinuierlich in ein Werkzeug ausgetragen werden. Die kontinuierliche Austragung aus dem darin beschriebenen sogenannten Compounder ist in diesem Dokument nicht dargestellt.

Allgemein bekannt ist auch die kontinuierliche Herstellung von Materialbändern, wie Isolierpaneelen, Sandwichbänder oder andere Materialkompositionen. Dabei werden Doppelbänder verwendet, wie beispielsweise in der DE 10 2008 061 835 B3 beschrieben. Das in diesem Dokument beschriebene Doppelband besteht aus einem Unter- und einem Oberband, die gegeneinander elektrisch verstellbar sind.

Aufgabe der vorliegenden Erfindung ist es, eine Vorrichtung zur Herstellung eines Verbundwerkstoffes anzugeben, mit der sich ein hochgefüllter Verbundwerkstoff kontinuierlich, kostengünstig und einfach herstellen lässt.

Die vorgenannte Aufgabe ist durch die im Anspruch 1 angegebenen Merkmale gelöst.

Der Verbundwerkstoff kann dabei als Baumaterial mit Schall und Wärme dämmenden Eigenschaften verwendet werden.

Dabei ist ein Gedanke der vorliegenden Erfindung unter anderem darin zu sehen, dass mindestens eine Compoundiereinheit mit einer Doppelbandeinheit kombiniert ist. Dabei kann die Compoundiereinheit zur Verarbeitung von Füllstoffen mit einem Füllstoffanteil von mehr als 40 %, insbesondere mehr als 65 %, vorzugsweise mehr als 75 % ausgebildet sein. Der Füllstoff ist gemäß einer besonders bevorzugten Ausführungsform Zement. Alternativ oder zusätzlich eigenen sich als Füllstoffe aber auch sonstige Additive, Faserstoffe, Kreide, Recyclingmaterial etc.

Der Füllstoff wie auch die reaktiven Ausgangsmaterialien werden in der Compoundiereinrichtung miteinander vermischt und vorzugsweise über eine Düse, beispielsweise eine Schlitz- oder Breitschlitzdüse, ausgetragen. Alternativ kann die Austragung auch offen, beispielweise in einen ersten Kalander erfolgen.

Nachfolgend der Compoundiereinrichtung wird das Materialgemisch vor Ablauf der Reaktionszeit zur Formgebung der Doppelbandeinrichtung zugeführt und in dieser auf den zwischen dem Unter- und dem Oberband eingestellten Zwischenraum verformt. Dabei können durch eine entsprechende Formausgestaltung des Ober-und Unterbandes auch unterschiedliche Profilformen gebildet werden.

Gemäß einer bevorzugten Ausführungsform sind in der Compoundiereinrichtung zumindest zwei oder mehrere Extrusionsschnecken dichtkämmend angeordnet und/oder gleichlaufend angetrieben. Dabei kann die Anordnung der Komponentenzuführungen und der Anordnung der Scheckenelemente von besonderer Bedeutung und je nach Materialverwendung unterschiedlich sein.

Um die Verbundwerkstoffbahn, welche die Doppelbandeinrichtung verlässt, abzulängen, ist nachfolgend der Doppelbandeinrichtung vorzugsweise eine Ablängeinrichtung (z.B. Säge, Messer, etc.) vorgesehen. Auch andere Nachbearbeitungseinrichtungen, wie Schleif-, Fräs-, Formeinrichtungen, etc. können der Doppelbandeinrichtung nachgeschaltet werden. Solche Nachfolgeeinrichtungen dienen der endgültigen Formgebung des Plattenmaterials.

Um zum einen ein Anhaften des reaktiven Materialgemisches am Unter- und/oder dem Oberband zu vermeiden oder eine oberflächenmäßige Gestaltung (Prägegestaltung) zu erreichen, wird gemäß einer besonders bevorzugten Ausführungsform entweder zwischen dem Materialgemisch und dem Unterband oder zwischen dem Materialgemisch und dem Oberband oder zwischen dem Materialgemisch und beiden Bändern eine Zwischenbahn eingeführt, die beispielsweise von Rollen stammen kann, von denen die jeweiligen Zwischenbänder kontinuierlich abgezogen werden. Diese Zwischenbänder können nachfolgend der Doppelbandeinrichtung wieder aufgerollt werden. Alternativ können Sie auch am Produkt verbleiben; weiter sind auch Endloszwischenbänder vorstellbar, die entsprechend um das jeweilige Unter- oder Oberband herumgeführt werden müssten.

Sowohl die reaktiven Materialien wie auch die Füllstoffe können über Dosiervorrichtungen in notwendigen und gewünschten Menge zur Verfügung gestellt werden. Dabei sind die Dosiervorrichtung für den oder die Füllstoffe wie auch diejenige für die Compoundiereinheit vorzugsweise zur Verarbeitung von Füllstoffen (beispielsweise Zement) in der vorgegebenen Dosierung vorgesehen. Solche Dosierungen können gravimetisch oder volumentrisch betrieben werden. Natürlich können auch andere Füllstoffe wie Glasfaser, Kreide, etc. alternativ oder zusätzlich zugegeben werden. Auch die Zugabe weiterer Additivstoffe ist natürlich möglich.

Mit der erfindungsgemäßen Vorrichtung lassen sich beispielsweise Plattenbauteile, Dämmstoffe für die Bauindustrie mit Schall- und oder Wärmedämmeigenschaften in vielfältiger Querschnittsgeometrie auf sehr effiziente und kostengünstige Weise herstellen.

Der Compoundiervorgang hat den Vorteil, dass hohe Füllgrade der Reaktivmatrix und eine gute Benetzung der Füllstoffe erreicht werden können. Überdies ist keine Schneidwerk für Fasern als Füllstoff erforderlich. Weiter werden Fasern in ihre einzelnen Filamente aufgespleist.

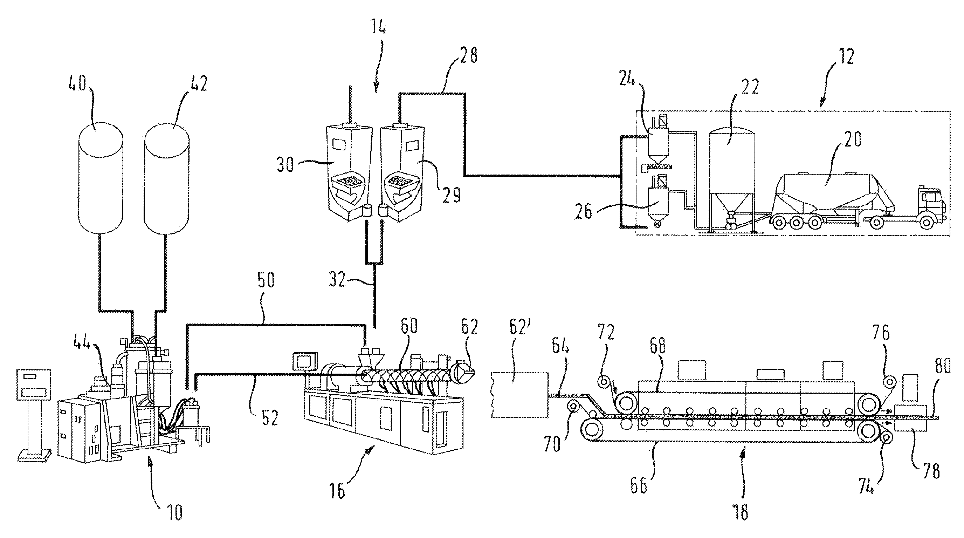

Eine konkrete Ausführungsform der vorliegenden Erfindung wird nachfolgend mit Bezug auf die beiliegende Zeichnung näher beschrieben. Die Zeichnung zeigt in der einzigen Figur eine schematische Anordnung einer Anlage zur Herstellung eines Polymerelements mit Zement als Füllstoff.

Dabei wirken eine Polyurethan-Dosiereinheit 10, eine Einheit zur Zementbereitstellung 12, eine Zement- und Glasfaserdosierung 14, eine Compoundiereinrichtung 16 und ein Doppelband 18 in nachfolgend beschriebener Weise zusammen.

Ein Kernelement der vorliegenden Anlage stellt die Compoundiereinrichtung 16 dar, hinsichtlich derer auf die DE 10 2006 038 197 verwiesen wird, deren Offenbarungsinhalt in vollem Umfang hiermit miteinbezogen ist.

Die Compoundiereinrichtung 16 weist eine Verfahrenseinheit 60 auf, die einen Extrusionszylinder mit zwei dichtkämmenden und gleichsinnig angetriebenen Extruderschnecken (nicht dargestellt) umfasst. Die Extruderwellen sind über eine Antriebseinheit gleichsinnig drehangetrieben. Der Extrudierzylinder weist vorliegend zwei Zufuhröffnungen auf, wobei über eine in Strömungsrichtung erste Zufuhröffnung eine erste reaktive Materialkomponente (z. B. Polyol) sowie der Füllstoff (vorliegend Zement) zugeführt werden. Alternativ können auch weitere Zufuhröffnungen vorgesehen sein. Überdies ist es beispielsweise zu Reinigungszwecken möglich, Faserstoffe (z.B. Glasfaser) zuzugeben, welche die aus Schnecken und Zylinder bestehende Verfahrenseinheit reinigen können.

In einer strömungsmäßig nachfolgenden Zufuhröffnung wird die Isocyanatkomponente zugeführt. Die erste reaktive Materialkomponente sowie die zweite reaktive Materialkomponente werden über Zufuhrleitungen 50, 52 von der Polyurethan-dosiereinheit 10 mittels einer Fördereinrichtung 44 für die jeweiligen Materialkomponenten zur Verfügung gestellt, wobei die Materialkomponenten selbst in verschiedenen Behältnissen 40, 42 zur Verfügung gestellt werden.

Die Füllstoffkomponente - hier Zement - wird über Dosiervorrichtungen 29 und 30 bereitgestellt. Dabei wird über die Dosiervorrichtung 29 Glasfaser zugeführt und über die Dosiervorrichtung 30 der Zement von der Zementdosierung 14 über die Förderleitung 32 geliefert. Der Zement stammt von einer Einheit 12 zur Bereitstellung des Zements. Diese Einheit 12 umfasst ein Zementsilo 22, welches bei Unterschreiten eines bestimmten Füllstandes mit einem Fahrzeug 20 zum Zementtransport befüllt wird. Das Zementsilo 22 stellt den Füllstoff Zement-Zufuhreinrichtungen 24, 26 zur Verfügung, die diese Material-Komponente fördern, eventuell aufbereiten und über die Zufuhrleitung 28 der Zementdosierung 29 zur Verfügung stellen.

In der Compoundiereinrichtung 16 werden die zumindest drei vorgenannten Materialien, nämlich die reaktive Materialkomponente 1 (z.B. Polyol), die reaktive Materialkomponente 2 (z.B. Isocyanat) und der Füllstoff (hier: Zement) homogen miteinander vermischt und am strömungsmäßigen Ende der Compoundiereinheit über eine Breitschlitzdüse 62 ausgetragen. Alternativ kann der Austrag auch einfach über ein offenes Ende am Ende der Compoundiereinrichtung erfolgen.

Natürlich können auch noch weitere Additive und Zusatzstoffe der Compoundiereinrichtung zugeführt werden, die dann ebenfalls innig und homogen in das Materialgemisch eingemischt werden.

Über die Breitschlitzdüse 62 (in der Fig. auch nochmals als Bezugsziffer 62' in schematischer Form dargestellt) wird das reaktive Materialgemisch, bestehend aus den reaktiven Materialkomponenten 1 und 2 sowie Füllstoff mit einem Füllstoffanteil von zumindest 40 %, insbesondere 65 %, vorzugsweise 75 %, in Form einer Materialbahn der Doppelbandeinrichtung 18 zugeführt; diese besteht aus einem Unterband 66 und einem Oberband 68, was in der DE 10 2008 061 835 B3 ausführlicher beschrieben ist. Insofern wird die DE 10 2008 061 835 B3 vollumfänglich hiermit miteinbezogen.

Durch die entsprechende Beanstandung des Unterbandes 66 und Oberbandes 68 wird ein spaltförmiger Zwischenraum erzeugt, der die Dicke der Materialbahn bestimmt; vorzugsweise wird die Materialbahn dabei mit einer größeren oder kleineren Dicke als die Dicke des Zwischenraumes dem Doppelband 18 zugeführt, so dass entweder eine geringfügige Verdichtung und Verprägung erfolgt oder sich das Reaktionsgemisch ausdehnen kann.

Um zu verhindern, dass sich das reaktive Materialgemisch an dem Ober- oder Unterband festsetzt, werden vorliegend über zwei Abzugsrollen 64 und 72 eine untere Zwischenbahn wie auch eine obere Zwischenbahn jeweils zwischen dem reaktiven Materialgemisch und dem Unterband 66 bzw. dem reaktiven Materialgemisch und dem Oberband 68 zugeführt. Diese Zwischenbahnen dienen der Vermeidung einer Anhaftung.

Am Ende des Doppelbandes 18 werden diese Zwischen bahnen auf zwei entsprechenden Rollen 74 und 76 wieder aufgerollt, so dass das am Ende des Doppelbandes 18 über die Länge der Vorrichtung ausgehärtetes Material in Bahnform austritt und in eine Ablängeinrichtung 78 eingeführt wird, in der in gewünschter Weise die Bahn abgelängt wird, so dass bahnförmige Abschnitte aus dem Verbundmaterial 80 entstehen.

Damit können in einem Verfahrensschritt Plattenelemente mit einem gefüllten Duroplastmaterial hergestellt werden, die sich beispielsweise für Bauzwecke in besonderer Weise eignen, da sie feuerhemmend sein können und isolierenden Charakter (Schall und Wärme) besitzen.

Natürlich können auch noch andere Nachbearbeitungsschritte nach dem Doppelband, wie Schleifen, Fräsen, Beschichten, etc. durchgeführt werden.

### Bezugszeichenliste

- 10: Polyurethan-Dosiereinheit
- 12: Einheit zur Zementbereitstellung
- 14: Zementdosierung
- 16: Compoundereinrichtung
- 18: Doppelband
- 20: Fahrzeug zum Zementtransport
- 22: Zementsilo
- 24: Zementzufuhreinrichtung
- 26: Zementzufuhreinrichtung
- 28: Zufuhrleitung für Zement
- 29: Zementdosiereinheit
- 30: Glasfaserdosiereinheit
- 32: Zufuhrleitung
- 40: Behälter für reaktive Materialkomponente 1
- 42: Behälter für reaktive Materialkomponente 2
- 44: Fördereinrichtung für Materialkomponenten 1 und 2
- 50: Zufuhrleitung für Materialkomponente 1
- 52: Zufuhrleitung für Materialkomponente 2
- 60: Verfahrenseinheit besehend aus Zylinder und Extruderschnecken
- 62: Flachdüse
- 62': Flachdüse (nochmalige schematische Darstellung)
- 64: Materialband
- 66: Unterband
- 68: Oberband
- 70: Erste Rolle für unteres Zwischenband
- 72: Erste Rolle für oberes Zwischenband
- 74: Aufwickelrolle für unteres Zwischenband
- 76: Aufwickelrolle für oberes Zwischenband
- 78: Ablängeinrichtung
- 80: Verbundwerkstoffbahn/Materialbahn

## Patentansprüche

1. Vorrichtung zur Herstellung eines Verbundwerkstoffes umfassend
- eine Compoundiereinheit (16) mit
-- einer Verfahrenseinheit (60) mit einem Zylinder in dem zumindest zwei Extrusionsschnecken nach Art eines Extruders aufgenommen und drehangetrieben sind,
-- zumindest eine Zufuhröffnungen, wobei in die zumindest eine Zufuhröffnung oder in mehrere Zufuhröffnungen zwei reaktive Ausgangsmaterialien sowie zumindest ein oder mehrere Füllstoff zuführbar sind,
sowie eine der Compoundiereinheit (16) nachgeschaltete Doppelbandeinrichtung (18) mit
-- einem Unterband (66) und einem dazu beabstandeten Oberband (68) zwischen denen ein Abstand definierter Dicke ausgebildet ist, welchem das in der Compoundiereinheit (18) hergestellte Materialgemisch zugeführt wird.

2. Vorrichtung nach Anspruch 1,
**dadurch gekennzeichnet,**
**dass** die Extrusionsschnecken dichtkämmend angeordnet sind.

3. Vorrichtung nach Anspruch 1 oder 2,
**dadurch gekennzeichnet,**
**dass** die beiden Extrusionsschnecken gleichlaufend angetrieben sind.

4. Vorrichtung nach einem der Ansprüche 1 bis 3,
**dadurch gekennzeichnet,**
**dass** nachfolgend der Doppelbandeinrichtung (18) eine Nachbearbeitungseinrichtung (78) zum Ablängen und/oder zur Konturbearbeitung der die Doppelbandeinrichtung verlassenden Materialbahn (80) vorgesehen ist.

5. Vorrichtung nach einem der vorhergehenden Ansprüche,
**dadurch gekennzeichnet,**
**dass** zumindest eine Einrichtung (70, 72) zur Zufuhr eines Zwischenbandes zwischen das Materialgemisch und das Unter- (66) und/oder Oberband (68) vorgesehen ist.

6. Vorrichtung nach einem der vorhergehenden Ansprüche,
**dadurch gekennzeichnet,**
**dass** Dosiervorrichtungen (10; 44) für reaktive Materialien, insbesondere für Polyol-Materialien und Isocyanat-Materialien, vorgesehen sind.

7. Vorrichtung nach einem der vorhergehenden Ansprüche,
**dadurch gekennzeichnet,**
**dass** mindestens eine Dosiervorrichtung für den Füllstoff (14; 30) und/oder ein Additiv vorgesehen ist.

8. Vorrichtung nach Anspruch 6,
**dadurch gekennzeichnet,**
**dass** die Dosiervorrichtung für den Füllstoff (14; 30) zur Dosierung von Zement ausgebildet ist.

9. Vorrichtung nach einem der vorhergehenden Ansprüche,
**dadurch gekennzeichnet,**
**dass** die Verfahrenseinheit (60) der Compoundiereinheit (16) zur Verarbeitung von Füllstoffen mit einem Anteil von zumindest mehr als 40%, insbesondere mehr als 65 %, vorzugsweise mehr als 75% ausgebildet ist.

10. Vorrichtung nach einem der vorhergehenden Ansprüche,
**dadurch gekennzeichnet,**
**dass** die Verfahrenseinheit (60) zur Verarbeitung von Zement als Füllstoff ausgebildet ist.
